# EUROPEAN PATENT APPLICATION

(11) **EP 2 295 334 A2**
(43) Date of publication of application: **16.03.2011**
(21) Application number: 09758496.5
(22) Date of filing: 02.06.2009
(51) Int. Cl.: B65D 25/56, B65D 25/38, B65D 25/02, B65D 25/40

(54) **QUANTITATIVE MEASUREMENT CONTAINER**

(30) Priority: 03.06.2008 KR 20080051887; 05.06.2008 KR 20080052821
(71) Applicant: Shin, Bokin, Haan-dong 864, Gwangmyeong-si, Gyeonggi-do 423-060 (KR)
(72) Inventor: Shin, Bokin, Haan-dong 864, Gwangmyeong-si, Gyeonggi-do 423-060 (KR)
(74) Representative: Romano, Giuseppe
(86) International application number: PCT/KR2009/002914
(87) International publication number: WO 2009/148243

(57) **Abstract**

The present invention relates to a container for containing a liquid phase or fine powder particles, and is intended to provide improvement over conventional problems of having to use a separate calibrated measuring cup or container for using a predetermined quantity of such content. To this end, such as blow container (10) or vinyl container (12) is provided which enables a consumer to measure quantitatively a predetermined quantity of desired content in a conventional manner by using inner container (30) and size marking (32) which are built into the container. The representative drawings are Fig. 2 (blow container) and Fig. 9(vinyl container). The index words are as follows: blow container, inner container, inner injection port, outer injection port, vinyl container, outline compression portion, injection port body, and inner compression portion.

## Description

### FIELD OF THE INVENTION

The present invention relates to a installment structure within a container for containing contents, and more particularly, to a quantitative measurement containers 10, 12 formed integrally with an inner container which enables a consumer to measure quantitatively the contents without using a separately provided cup or spoon for measuring quantitatively amount of the contents.

### BACKGROUND OF THE INVENTION

The present invention relates to a container provided integrally with an inner container 30 which enables a consumer to measure quantitatively contents. For example, the present invention relates to a container for containing fluid material such as liquid detergent for laundry, fiber flexibility agent or synthetic detergent for washing vegetable, fruit or dish, shampoo, etc., or powder type synthetic detergent for laundry (hereinafter, referring to as "contents"). According to prior art, a consumer has to use a separately provided cup or spoon for measuring quantitatively the contents such as liquid detergent, powder type detergent to spend a predetermined amount of the contents, or he/she spends roughly the contents without measuring the contents precisely.

The object of the present invention relates to provide a container which decreases inconveniency caused from when the separately provided cup or spoon is used for measuring quantitatively the contents, according to the prior art, and thus according to the present invention, a consumer can spend the contents as much as he/she desires. For example, the present invention relates to containers 10, 12 which enable a consumer to measure quantitatively desired amount of the contents such as liquid detergent, powder type detergent, or fiber flexibility agent, etc., depending on amount of cloth and water. Here, the container includes a blow container 10, a vinyl container 12 for refilling contents, or all kinds of container including paper, plastic container for containing contents.

### SUMMARY OF THE INVENTION

The present invention has focused on improvement over diminishing inconveniency caused from when a consumer uses separately provided cup or spoon for measuring quantitatively the contents, or uses roughly the contents without measuring the amount of the contents. For example, when fiber flexibility agent is used, an inner container 30 is provided integrally within a blow container 10 which enables a consumer to measure quantitatively the contents, which provides convenience with consumers. Another technical object to be solved is to provide containers 10, 12 which enable a consumer to measure quantitatively the contents without increasing manufacturing cost.

Referring to a container for containing contents, inner space of an inner container is formed such that it can be measured quantitatively using an integral inner container 30 which is connected to an outer injection port 21 formed around outer edge thereof. At this time, a size and marking 32 is made on the around of the inner container 30 in order to measure quantitatively contents. Meanwhile, the size and marking 32 may be formed as carving when the container is formed, or may be printed after forming the container, however, it does not matter so long as the size and marking are indicated.

The advantageous effects from the present invention are that quantitative measurement of the contents and convenience in using and further cost saving. Furthermore, water contamination caused from overusing the contents can be avoided. For one example, a predetermined amount of liquid detergent, powder type detergent, or fiber flexibility agent is indicated, depending on amount of cloth and water and thus separately provided cup or spoon has to be used for measuring quantitatively the contents. However, according to the present invention, through the inner container 30 provided integrally with the containers 10, 12 for containing the contents, desired amount of the contents can be measured and used without using the separately provided sup or spoon. Accordingly, under amount use or over amount use of the contents can be avoided with using the container according to the present invention. Furthermore, the separately provided cup or spoon is not necessary, saving manufacturing cost.

### BRIEF DESCRIPTION OF THE DRAWINGS

FIG. 1 shows a conventional blow container 10 provided with a liquid injection plastic port.
FIG. 2 shows a blow container provided integrally with an inner container 30 which enables a consumer to measure quantitatively contents according to an embodiment of the present invention, the inner container being supported on one side thereof.
FIG. 3 shows a blow container provided integrally with an inner container 30 which enables a consumer to measure quantitatively contents according to another embodiment of the present invention, the inner container being supported on both sides thereof.

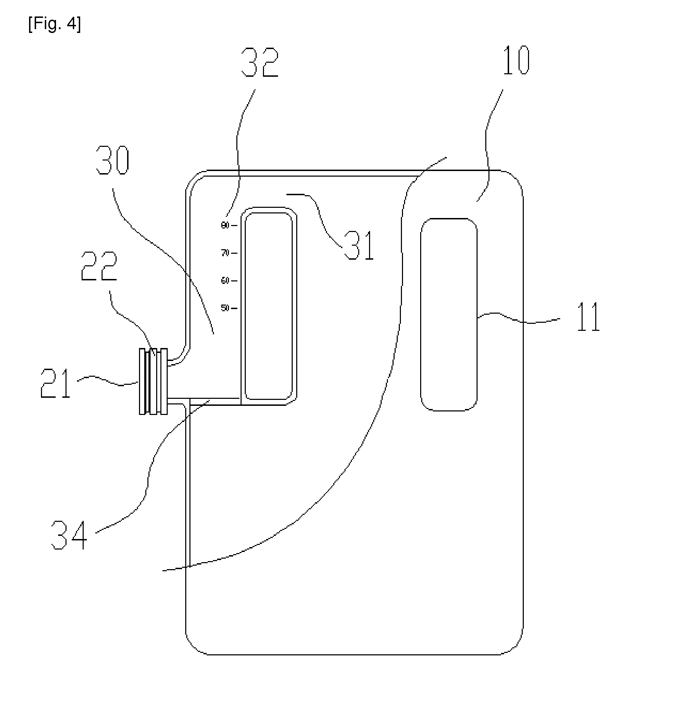

FIG.4 shows an inner container 30 which enables a consumer to measure quantitatively contents according to another embodiment of the present invention, on a bottom surface of which a floor material 34 is arranged for containing contents. At this time, the floor material 34 is prepared integrally with the blow container or separately from the blow container. Accordingly, how the floor material 34 is configured is not concerned and it is intended for only constituting the inner container 30.

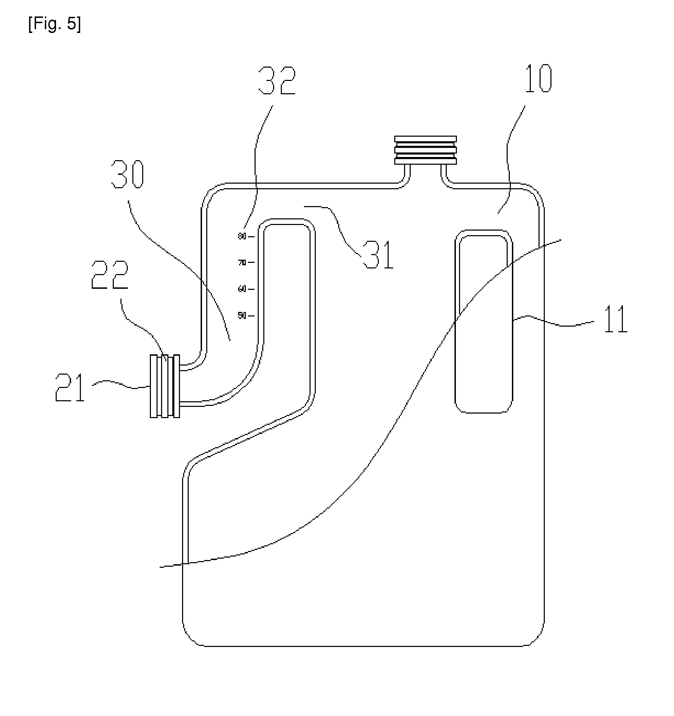

FIG. 5 shows a blow container 10 provided with an inner container 30 which enables consumer to measure quantitatively contents according to the embodiment of the present invention shown FIG. 2, two outer injection ports 21 being provided to the blow container 10.
FIG. 6 shows a conventional vinyl container 12 for refilling contents, which is provided with outer injection plastic port 21.
FIG. 7 shows a vinyl container 12 provided with an inner container 30 which enable a consumer to measure quantitatively contents, in which inner space for accommodating contents is not so enough that capacity of the inner container 30 becomes small.
FIG. 8 shows a vinyl container 12 provided with an inner container 30 which enables a consumer to measure quantitatively contents wherein when the inner container 30 is formed compressively, a compression support unit 42 is formed integrally with an injection port body 21. Here, the integral forming of the compression support unit 42 and the injection port body 21 may be preferable for efficient working and material saving when a melt connection of them for ensuring inner space of the inner container 30 is done.
FIG. 9 shows a vinyl container 12 for refilling contents provided with an inner container 30 which enables a consumer to measure quantitatively contents wherein a compression support unit 42 formed integrally with an injection port body 21 is melt connected between the vinyl container 21 and further inner space of the inner container 30 is ensured.

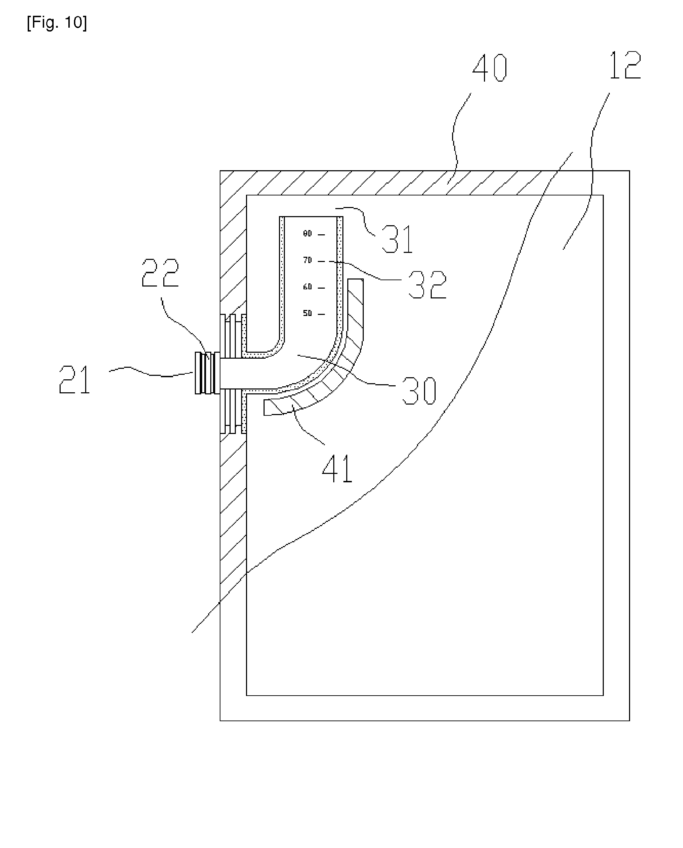

FIG. 10 shows a vinyl container 12 for refilling contents provided with an inner container 30 which enables a consumer to measure quantitatively contents wherein the inner container 30 is cast-formed integrally with an outer injection port 21, regardless of inner melt connection for the inner container 30.

The present application method is not limited to the embodiments shown in the accompanied drawings, that is, the method may be applied to all containers wherein an inner container 30 enabling a consumer to measure quantitatively contents, and size and marking 22 thereof are formed integrally, regardless of shape and material of the container.

### DETAILED DESCRIPTION OF THE INVENTION

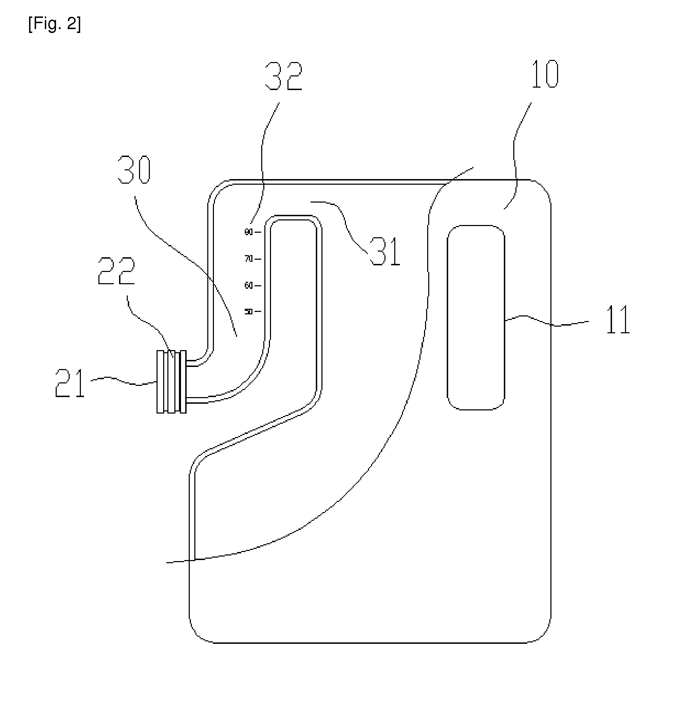

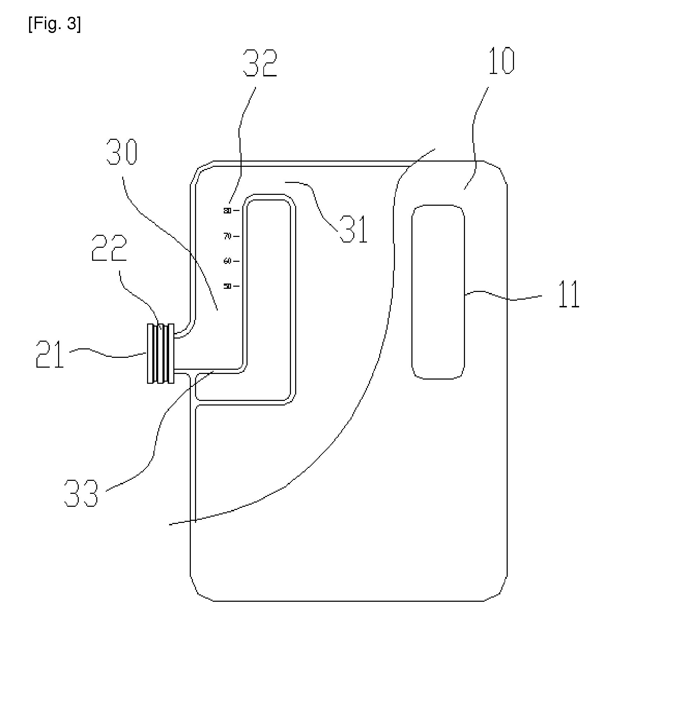

A blow container 10 for containing contents is provided wherein inner space of an inner container is formed such that it can be measured quantitatively using an integral inner container 30 which is connected to an outer injection port 21 formed around outer edge thereof. At this time, a size and marking 32 is made on the inner container 30 within the blow container in order to measure quantitatively contents. The best mode of this embodiment is shown in FIGs. 2 and 3.

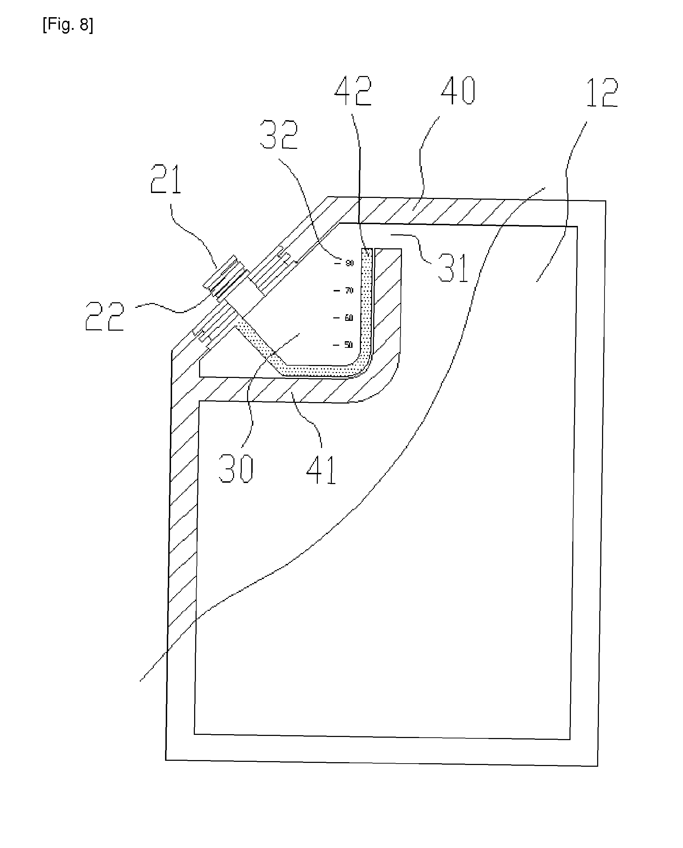

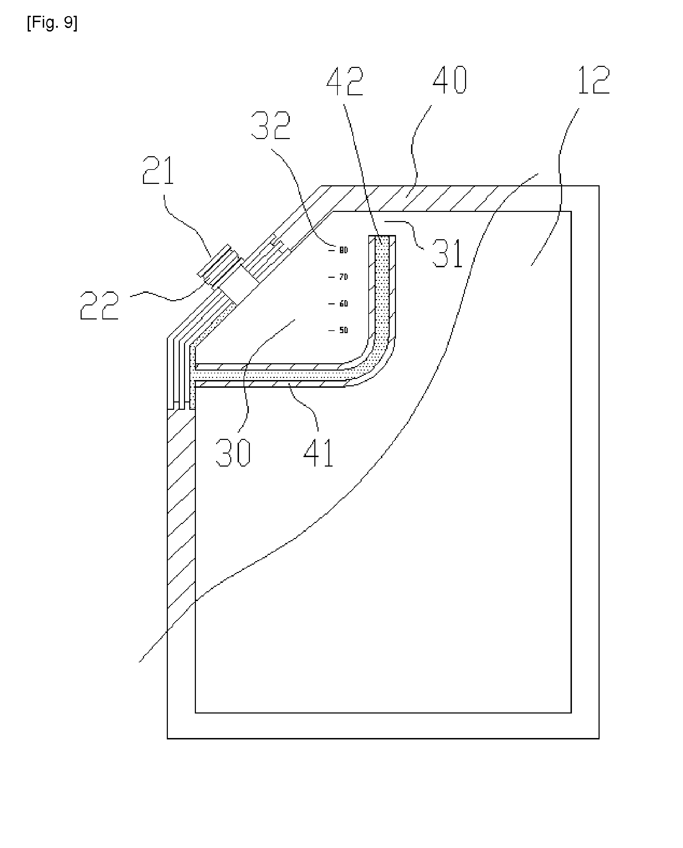

As an similar embodiment, an embodiment shown in FIG. 9 is provided through which inner space of the inner container 30 is to be ensured efficiently as best mode of the embodiments of the present invention. That is, the embodiment shown in FIG. 9 is similar to that shown in FIG. 8, however, it is pointed that inner space of the inner container 30 is formed and a compression support unit 42 for compressing an inner compression portion 41 is formed integrally on an injection port plastic body 21. In order to form the inner space of the inner container 30 the compression unit 42 connected to the injection port body 21 is placed on the middle part of the vinyl container when the inner compression portion 41 is compressed and thus it acts as a compression guideline and further allows the inner space of the inner container 30 to be formed to contain quantitatively contents. At this time, a role of the inner container 30 for containing quantitatively contents is determined by the inner compression portion 41 and further the compression support unit 42 helps just to form the inner space.

Here, the best mode for embodying the present invention can be improved, depending on application or manufacturing method for products.

The preferred embodiments of a quantitatively measurement container according to the present invention will be described in detail referring to the accompanied drawings, referring to a blow container 10 and a vinyl container 12 for refilling contents as an example. However, it has to be understood that the present invention is not limited to the provided embodiments without departing from a spirit of the present invention.

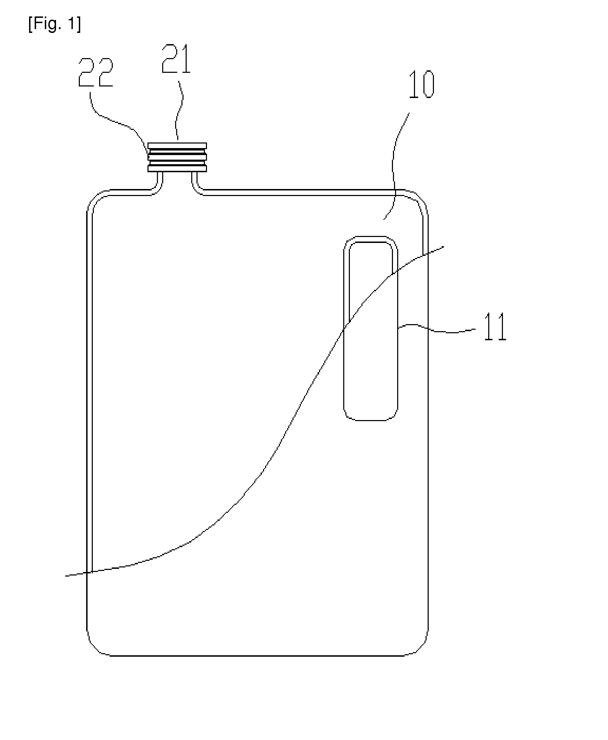

First, referring to the blow container 10, FIG. 1 shows a conventional blow container 10 provided with a liquid injection plastic port, and FIG. 2 shows a blow container provided integrally with an inner container 30 which enables a consumer to measure quantitatively contents according to an embodiment of the present invention, the inner container being supported on one side thereof.

At this time, an inner injection port 31 is formed such that contents is injected into the inner container 30 and filled therein. Through this configuration a consumer allows the contents to be moved into the inner container 30 as much as desired using his/her hands and then lid is opened and contents is poured into desired place through an injection port of the outer injection port 21. Here, the contents which is contained in the inner container 30 and used quantitatively may be liquid phase and also small powder particles such as detergent. In order to measure quantitatively the contents to be used a size and marking 32 should be made on the blow container near to the inner container 30 wherein the size and marking 32 may be made basically when the blow container is formed to save material, however, the size and marking may be printed separately on the inner container 30. At this time, around region of the size and marking 32 of the blow container 10 is made of transparent or semi-transparent material to see and measure quantitatively the contents.

Meanwhile, a lid type of the outer injection port 21 for outputting the contents may be in one-touch manner, instead of fully being opened and closed configuration. However, the manner of opening the lid and outputting the contents may use a push way, or lever rotation way, etc., which is currently used in the market. That is, it is not limited to a special way.

Next, a preferred embodiment of the vinyl container 12 will be described, referring to the accompanied drawings.

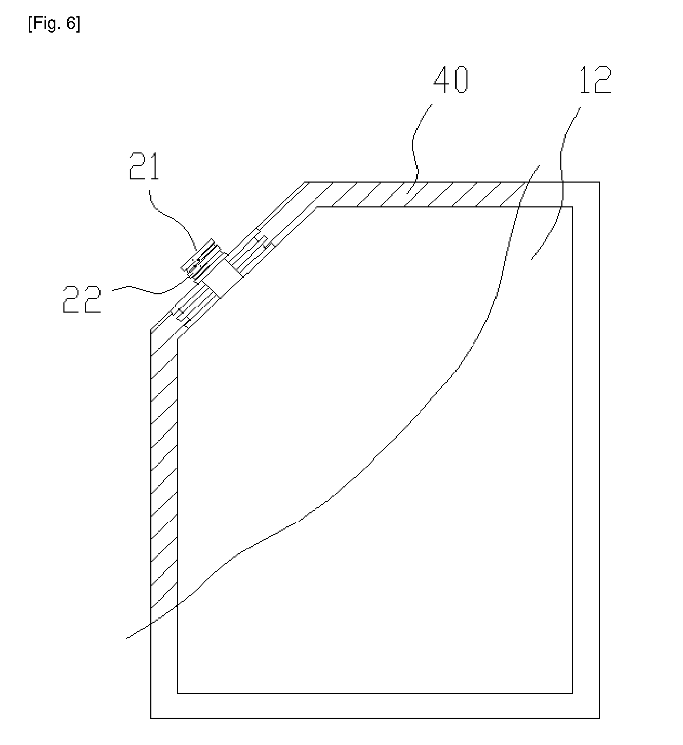

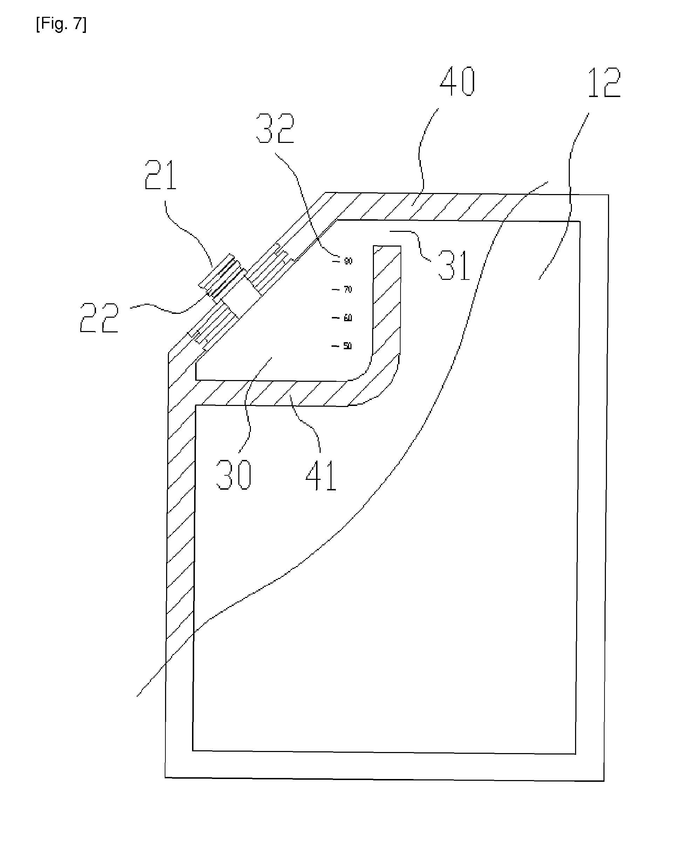

FIG. 6 shows a conventional vinyl container 12 for refilling contents, which is provided with outer injection plastic port 21, and FIG. 7 shows a vinyl container 12 provided with an inner container 30 which enable a consumer to measure quantitatively contents, in which inner space for accommodating contents is not so enough that capacity of the inner container 30 becomes small.

At this time, the inner injection port 31 is formed and compressed such that the contents is injected and filled into the inner container 30.

Through this configuration of the vinyl container 31 which measures quantitatively contents a consumer allows the contents to be moved into the inner container 30 as much as desired using his/her hands and then lid is opened and contents is poured into desired place through an injection port of the outer injection port 21. Here, the contents which is contained in the inner container 30 and used quantitatively may be liquid phase and also small powder particles such as detergent. In order to measure quantitatively the contents to be used a size and marking 32 should be made on the blow container near to the inner container 30 wherein the size and marking 32 may be made basically when the blow container is formed to save material, however, the size and marking may be printed separately on the inner container 30. At this time, around region of the size and marking 32 of the blow container 10 is made of transparent material to see and measure quantitatively the contents, as same as the blow container 10.

The industrial applicability of the present invention includes a quantitative measurement of contents, convenience for using it, and saving cost of material. Furthermore, over use of detergent or fiber flexibility agent can be avoided to preserve water source. For example, when cloths are done laundry, amount of detergent in liquid phase and powder type is determined differently from each case, depending on amount of cloth and water. Contrastively, according to the prior art, separate cup or spoon is used to measure quantitatively the detergent, which are provided with detergent products. However, according to the present invention the inner container 30 formed integrally with the containers 10, 12 can be used to measure quantitatively the amount of detergent, and thus the separate cup or spoon for measuring quantitatively detergent amount is not necessary, saving product cost. While the present invention is described referring to the preferred embodiment, the present invention is not limited thereto, and thus various variation and modification can be made without departing from a scope of the present invention.

## Claims

1. A container for containing contents comprising:
a separate inner container (10) which enables a consumer to measure quantitatively the contents as much as a user desires to spend wherein the container includes a blow container, or a vinyl container, etc. which contains contents.

2. A container for containing contents according to claim 1, wherein an inner injection port (31) is provided on the inner container (30) which enable a consumer to measure quantitatively the contents so that the contents is injected through the inner injection port (31).

3. A container for containing contents according to claim 1, wherein a size and marking (32) is indicated around the inner container (30) to measure quantitatively contents and the around region of the size and marking is made of transparent material to see the contents wherein the size and marking (32) is formed when the container is fabricated or printed after fabricating the container.
